# DEMANDE DE BREVET EUROPEEN

(11) **EP 1 905 570 A1**
(43) Date de publication de la demande: **02.04.2008**
(21) Numéro de dépôt: 06121466.4
(22) Date de dépôt: 28.09.2006
(51) Int. Cl.: B29C 53/38, B29C 65/40, B65D 35/00

(54) **Procédé et dispositif de soudage intérieur de tubes en matière plastique**

(71) Demandeur: Aisapack Holding SA, 1896 Vouvry (CH)
(72) Inventeur: Voigtmann, Jean-Pierre, 1893 Muraz (CH)
(74) Mandataire: Grosfillier, Philippe

(57) **Abrégé**

L'invention concerne un procédé de fabrication d'un emballage en matière plastique de forme tubulaire, procédé comprenant une étape d'enroulement lors de laquelle on enroule un laminé (11), une étape de mise en disposition lors de laquelle on dispose bout à bout les bords (8,9) du laminé (11) et une étape de fixation lors de laquelle on fixe l'un à l'autre par soudage lesdits bords(8.9) du laminé (11), caractérisé par le fait que l'on extrude et dépose un cordon de matière plastique (12) sur la face interne de l'emballage, de manière à recouvrir au moins la zone de soudure (10) définie entre les bords.

L'invention concerne également un emballage obtenu à partir du procédé précité ainsi qu'un dispositif pour la mise en oeuvre dudit procédé.

## Description

### Domaine de l'invention

L'invention se situe dans le domaine des emballages de forme tubulaires constitués notamment d'un laminé de matière plastique qui est enroulé.
Plus précisément, l'invention concerne les laminés enroulés dont les bords ne se chevauchent pas.

### Etat de la technique

Le soudage des bords d'un laminé afin d'obtenir un corps tubulaire se fait le plus souvent par chevauchement.
Voir à titre d'exemple la demande de brevet allemand DE 2008085.
Lorsque l'on cherche à disposer les bords face à face, on ménage entre ceux-ci un espace que l'on remplit avec un matériau tel que bande en matière plastique, la bande faisant office d'élément de soudure.
Voir à cet effet la demande de brevet européen EP 0 000 643.
Il existe cependant un besoin de mettre les bords en contact direct (soudage bout à bout), pour des raisons techniques et esthétiques.
Un soudage bout à bout assure une meilleure continuité et homgénéité du matériau qui constitue la paroi de l'emballage. II évite notamment un contact entre le produit disposé à l'intérieur du tube avec une couche barrière disposée à l'intérieure du laminé. Par ailleurs, l'inexistence d'un élément de soudure sur la face externe diminue la visibilité de la zone de soudure.
Par ailleurs, que les bords soient mis bout à bout, avec ou sans espace contenant un élément de soudure, il existe également un besoin de pouvoir diminuer, voire éliminer, la visibilité de la soudure depuis l'extérieur du tube.
Les systèmes de chauffage de l'état de la technique sont disposés à l'extérieur du tube. Leur activation induisent nécessairement une zone de soudure marquée et mate.

### Exposé général de l'invention

Le problème que la présente invention se propose de résoudre réside dans la fragilité d'une soudure bout à bout et le maintien d'une soudure esthétique, càd qui ne se remarque pas ou presque pas lorsqu'on l'observe depuis l'extérieur.

Dans l'invention, la solution du problème précité consiste à renforcer une telle soudure au moyen d'un cordon de matière plastique

L'invention concerne en premier lieu un procédé de fabrication d'un emballage en matière plastique de forme tubulaire, procédé comprenant une étape d'enroulement lors de laquelle on enroule un laminé, une étape de mise en disposition lors de laquelle on dispose bout à bout les bords du laminé et une étape de fixation lors de laquelle on fixe l'un à l'autre lesdits bords du laminé, caractérisé par le fait que l'on extrude et dépose un cordon de matière plastique sur la face interne de l'emballage, de manière à recouvrir au moins la zone définie entre les bords.

Selon une première variante du procédé selon l'invention, le cordon est déposé préalablement à l'étape de mise en disposition.

Selon une deuxième variante, le cordon est déposé pendant l'étape de mise en disposition.

Selon une troisième variante, le cordon est déposé consécutivement à l'étape de mise en disposition.
Le cordon peut être disposé en-dessous ou en-dessus de la zone de soudure.

L'invention concerne également un emballage de forme tubulaire obtenu selon le procédé tel que défini précédemment, l'emballage se caractérise par le fait qu'il comprend un élément de renforcement de la zone définie entre les bords qui est constitué d'un cordon extrudé de matière plastique.

L'invention concerne enfin un dispositif pour la mise en oeuvre d'un procédé tel que défini précédemment. Le dispositif se caractérise par le fait qu'il comporte une tige de soudage adaptée pour être entourée par un laminé caractérisé par le fait qu'il comporte des moyens pour extruder et disposer un cordon de matière plastique entre la surface externe de la tige de soudage et un laminé disposé autour de ladite tige.

Dans un mode de réalisation de l'invention, le dispositif comprend une courroie de transport préchauffée disposée sur la tige de soudage, de manière à ce que ledit cordon soit disposé entre ladite courroie et un laminé entouré ladite tige.

Dans un autre mode de réalisation de l'invention le dispositif comprend une courroie de conduite extérieure et un patin d'appui ajustable disposés de manière à exercer en direction de ladite tige une pression sur un laminé et un cordon de matière plastique qui seraient disposés entre ladite courroie de conduite et ladite tige.

Avantageusement, on peut utiliser un dispositif de préchauffage des bords, par exemple par contact, ce qui a pour effet d'augmenter la température des deux bords du laminé, facilitant ou améliorant ainsi les conditions de soudage.

Alternativement ou en outre, on utilise un autre dispositif muni d'un soufflage à air chaud de façon à maintenir l'air ambiant autour du cordon à plusieurs centaines de °C et de ce fait, éviter une chute en température du cordon lors de son passage de la sortie de la tête d'extrusion à la mise en forme du cordon.

Selon une variante de l'invention, les bords du laminé sont coupés en biais, ce qui a pour effet d'augmenter la surface latérale de contact du laminé dans la zone de soudure. Une telle configuration permet également d'influencer la qualité et la résistance de la soudure.

Dans une autre variante de l'invention, on extrude un cordon d'une forme autre que cylindrique, par exemple en forme de T inversé, ce qui facilite la mise en forme du cordon lors de la soudure.

La présente invention présente plusieurs avantages, en particulier :
- Un système de soudage complexe par haute fréquence n'est plus nécessaire, l'énergie nécessaire pour effectuer la soudure provient du cordon de soudure.
- L'aspect extérieur du tube est parfait étant donné que l'énergie pour effectuer la soudure est appliquée depuis l'intérieur. Avec les systèmes de l'état de la technique, on applique l'énergie depuis l'extérieur, la soudure est mate et marquée.
- Couche (cordon) recouvrante importante en PE ou PP (ou autres matières) à l'intérieur du tube sur la jonction des 2 bords du laminé, évitant tout contact entre le produit dans le tube et la couche barrière du laminé (ex. aluminium).

### Exposé détaillé de l'invention

L'invention est décrite plus en détail ci-après au moyen d'exemples illustrés par les figures suivantes :
La figure 1 est une vue en perspective d'un premier dispositif selon l'invention.
La figure 2 est une coupe latérale du dispositif de la figure 1.
La figure 3 est une vue en perspective d'un deuxième dispositif selon l'invention.
La figure 4 est une coupe latérale du dispositif de la figure 2.
La figure 5 est une vue en perspective d'un troisième dispositif selon l'invention.
La figure 6 est une coupe latérale du dispositif de la figure 3.
La figure 7 représente une première variante d'une soudure selon l'invention.
La figure 8 représente une deuxième variante d'une soudure selon l'invention.
La figure 9 représente une troisième variante d'une soudure selon l'invention.

### Liste des références numériques utilisées dans les figures

1. Tige de soudage
2. Matrice de calibrage (hauteur ajustable)
3. Courroie (métallique) intérieure
4. Filière de formation
5. Patin d'appui
6. Courroie extérieure
7. Tête d'extrusion
8. Premier bord de laminé
9. Deuxième bord de laminé
10. Zone de soudure
11. Laminé (bande continue)
12. Cordon de soudure extrudé
13. Couche barrière
14.Espace

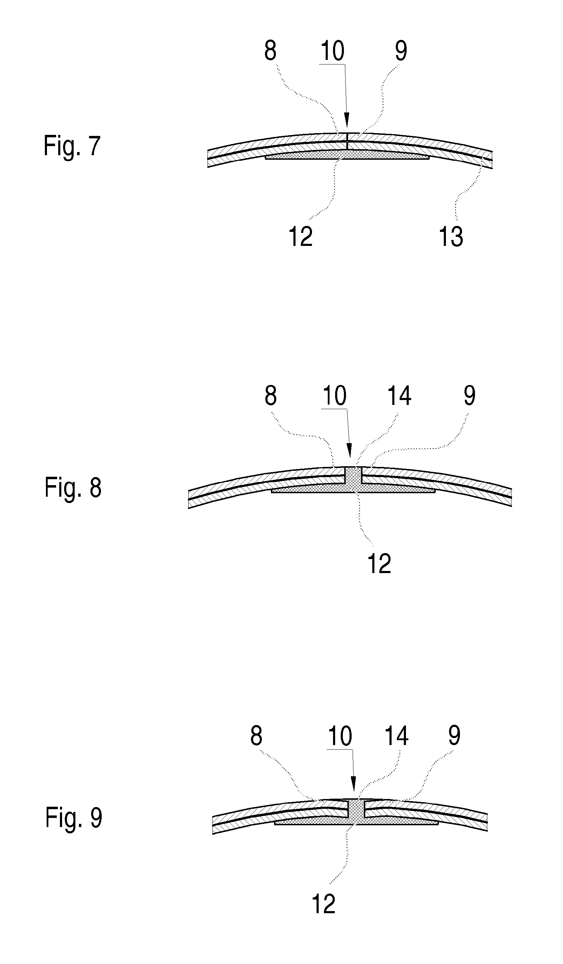

Le tube est formé en continu par enveloppement progressif de la tige soudage **1** sur toute sa circonférence avec un ruban de laminé **11** tiré (de gauche à droite sur les figures) au travers de la filière de formation **4** Le laminé **11** en PE ou PP (ou autres matières) (mono ou multicouches) est alors soudé longitudinalement par dépose d'un cordon de soudage extrudé **12** à l'intérieur du tube.
Selon la largeur donnée au laminé **11,** il est possible d'ajuster un espace **14** entre les bords **8,9** du laminé **11** formé sur le diamètre final du tube. Le cordon **12** déposé de l'intérieur pourra ainsi remplir cet espace **14** (figure 8) et souder également la couche extérieure d'un laminé **11 .** p.ex. multicouches qui contient une couche barrière **13.** Au besoin, la soudure **12** pourra même recouvrir en partie une portion externe des bords **8,9** du laminé **11** (figure 9).
Pour des raisons esthétiques, on préfère minimiser cet espace **14 .**

### 1ere variante:

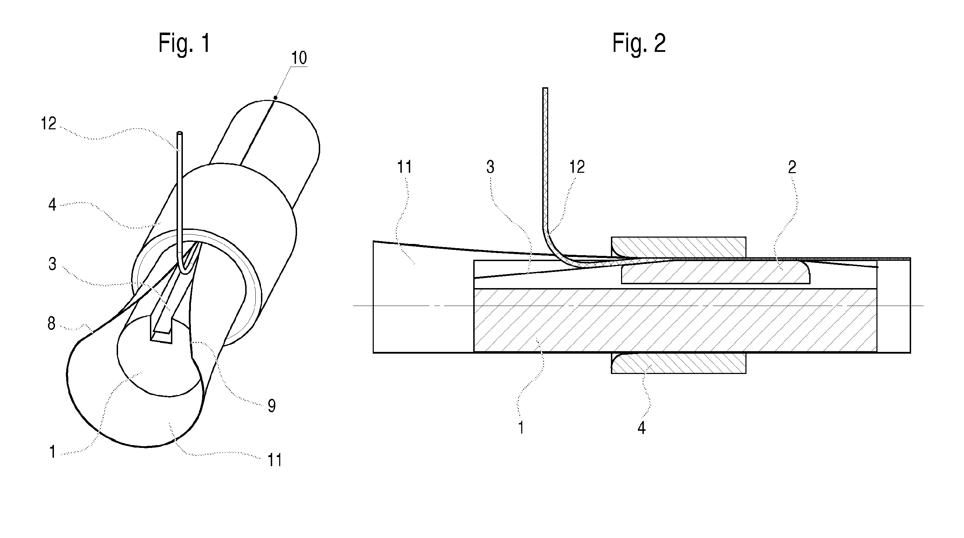

Les figures 1 et 2 illustrent l'introduction du cordon extrudé **12** par l'intermédiaire d'une courroie de transport préchauffée **3** sur une matrice de calibrage **2** ajustable en hauteur après que la section du tube soit définitivement formée par le laminé **11** dans une filière **4.**
Le cordon de soudure **12** est d'abord appliqué contre l'intérieur du tube préformé. La soudure est ensuite calibrée aux dimensions voulues (soudure en haut).

### 2e variante:

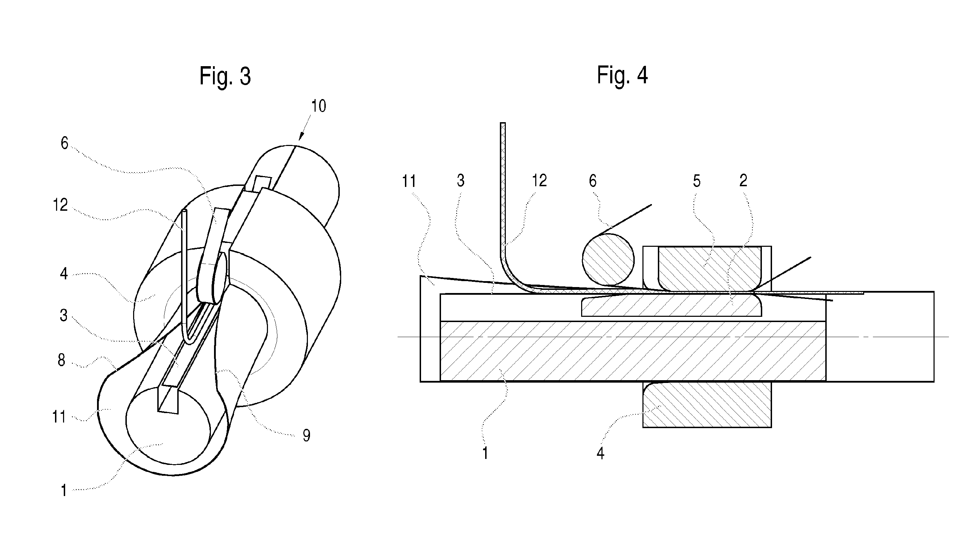

Les figures 3 et 4 montrent l'engagement d'un cordon extrudé **12** par l'intermédiaire d'une courroie de transport préchauffée **3** sur une matrice de calibrage **2** ajustable en hauteur avant que la section du tube soit définitivement formée par le laminé **11** dans la filière **4.**
Ainsi les bords **8,9** du laminé **11,** dans sa dernière phase de mise en forme, sont appliquées et pressés sur le cordon **12** prépositionné, au moyen d'une courroie de conduite extérieure **6** et un patin d'appui ajustable **5.** La soudure est donc calibrée par le positionnement préalable du cordon **12,** mais surtout par le réglage en hauteur du patin d'appui **5.**

### 3^{e} variante:

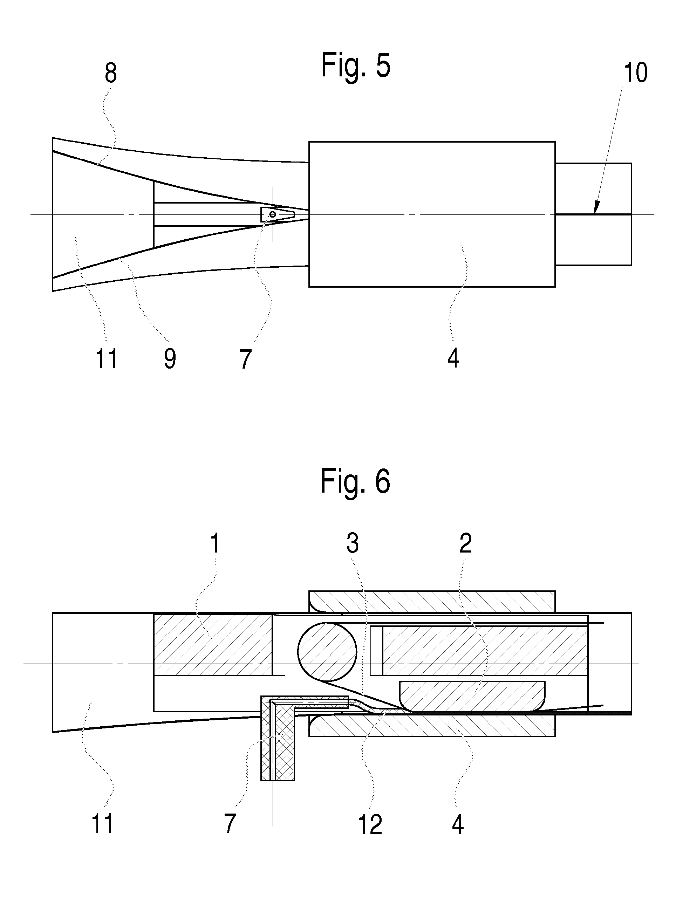

Les figures 5 et 6 montrent un principe similaire mais renversé avec cette fois la soudure en bas.
Le cordon extrudé **12** est directement déposé à l'intérieur du tube après que sa section circulaire soit définitivement formée par le laminé **11** dans la filière **4.** La soudure est ensuite pressée et calibrée par l'intermédiaire de la courroie intérieure **3** et de la matrice de calibrage **2** ajustable en hauteur.

Bien évidemment, l'invention ne se limite pas aux exemples précités.

## Revendications

1. Procédé de fabrication d'un emballage en matière plastique de forme tubulaire, procédé comprenant une étape d'enroulement lors de laquelle on enroule un laminé (11), une étape de mise en disposition lors de laquelle on dispose bout à bout les bords (8,9) du laminé (11) et une étape de fixation lors de laquelle on fixe l'un à l'autre par soudage lesdits bords(8.9) du laminé (11), **caractérisé par le fait que** l'on extrude et dépose un cordon de matière plastique (12) sur la face interne de l'emballage, de manière à recouvrir au moins la zone de soudure (10) définie entre les bords.

2. Procédé selon la revendication 1 **caractérisé par le fait que** le cordon (12) est déposé préalablement à l'étape de mise en disposition.

3. Procédé selon la revendication 1 **caractérisé par le fait que** le cordon (12) est déposé pendant l'étape de mise en disposition.

4. Procédé selon la revendication 1 **caractérisé par le fait que** le cordon (12) est déposé consécutivement à l'étape de mise en disposition.

5. Procédé selon l'une quelconque des revendications précédentes **caractérisé par le fait que** l'on dispose le cordon (12) en-dessous de ladite zone de soudure (10).

6. Procédé selon l'une quelconque des revendications précédentes 1 à 4 **caractérisé par le fait que** l'on dispose le cordon (12) en-dessus de ladite zone de soudure (10).

7. Emballage de forme tubulaire obtenu selon un procédé tel que défini dans l'une quelconque des revendications précédentes **caractérisé par le fait qu'**il comprend un élément de renforcement de la zone définie entre les bords qui est constitué d'un cordon extrudé de matière plastique (12).

8. Dispositif pour la mise en oeuvre d'un procédé tel que défini dans l'une quelconque des revendications 1 à 6 **caractérisé par le fait qu'**il comporte une tige de soudage (1) adaptée pour être entourée par un laminé (11) **caractérisé par le fait qu'**il comporte des moyens (7) pour extruder et disposer un cordon de matière plastique (12) entre la surface externe de la tige de soudage (1) et un laminé (11) disposé autour de ladite tige (1).

9. Dispositif selon la revendication 8 comprenant en outre une courroie de transport préchauffée (3) disposée sur la tige de soudage (1), de manière à ce que ledit cordon (12) soit disposé entre ladite courroie de transport (3) et un laminé (11) entourant ladite tige (1).

10. Dispositif selon la revendication 8 ou 9 comprenant une courroie de conduite extérieure (6) et un patin d'appui (5) ajustable disposés de manière à exercer en direction de ladite tige de soudage (1) une pression sur un laminé (11) et un cordon de matière plastique (12) qui seraient disposés entre ladite courroie de conduite (6) et ladite tige de soudage (1).

11. Dispositif selon l'une quelconque des revendications 8 à 10 dans lequel lesdits moyens (7) pour extruder et disposer un cordon de matière plastique (12) sont disposés du côté de la face supérieure de la tige de soudage (1).

12. Dispositif selon l'une quelconque des revendications 8 à 10 dans lequel lesdits moyens (7) pour extruder et disposer un cordon de matière plastique (12) sont disposés du côté de la face inférieure de la tige de soudage (1).
